(19) Europäisches Patentamt
European Patent Office
Office européen des brevets

(11) **EP 3 793 076 A1**

(12) **EUROPEAN PATENT APPLICATION**

(43) Date of publication:
**17.03.2021 Bulletin 2021/11**

(51) Int Cl.:
**H02M 1/12** (2006.01)   **H02H 9/00** (2006.01)
**H02M 1/44** (2007.01)

(21) Application number: **19197400.5**

(22) Date of filing: **13.09.2019**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Hamilton Sundstrand Corporation Charlotte, NC 28217 (US)**

(72) Inventors:
• POPEK, Grzegorz
  Birmingham, B14 5QH (GB)
• CASTRO, Ignacio
  Gijón (ES)

(74) Representative: **Dehns**
St. Bride's House
10 Salisbury Square
London EC4Y 8JD (GB)

(54) **FILTER FOR POWER TRAIN**

(57)   An output filter for a power train having one or more phase lines, for a motor or other high impedance load, comprising, for each phase line of the power train, a main inductor (100), and in parallel with the main inductor, an auxiliary inductor (200) and a resistive element (300) connected in series.

FIG. 3

**Description**

TECHNICAL FIELD

The present disclosure relates to a filter to mitigate transmission line effects in a power drive line such as in an AC motor drive system.

BACKGROUND

Controlling motor speed and torque is mandatory in residential, commercial and industrial applications. An inverter drive is used to control speed and torque by controlling the frequency and voltage of the waveform provided to the motor by generating a Pulse Width Modulation (PWM) voltage output. The inverter drive can be either AC-AC or DC-AC depending on the input voltage. The waveforms to control the motor are often transmitted to the motor over long cables or lines.

The power cables have an inherent inductance and capacitance and a mismatch between the characteristic impedance of the cable and the connected motor and other components can cause electrical reflections along the power cable. These reflections result in surges or spikes of current and voltage at the motor terminal, because of the fast rise time (dv/dt) of pulses. The high frequency components of the pulses interact with the power cable causing the so-called transmission line effects. Such surges can have amplitudes of double the DC link voltage. These effects can cause damage to the motor windings and/or conductor insulation which can result in failure of the motor.

Various solutions to reduce voltage at the motor end and thus transmission line effects have been proposed, such as using an output filter in the form of coupled inductors, or an LC circuit in series with each phase line at the motor input. Such solutions, however, result in high weight and volume, reduced reliability and loss of capacitance due to self-healing effects, which can lead to loss of prime functionality.

A very common approach to manage transmission line effects is the use of an output RLC filter which 'slows down' the edges of the PWM signal to the motor. Such an arrangement can, however, lead to losses due to power dissipation. The resistive components also dissipate a lot of heat. This is particularly problematic in e.g. aerospace applications. The use of capacitors can also give rise to reliability concerns. Similar concerns exist for approaches involving providing RC terminators at the motor terminals.

An alternative approach to handling transmission line effects is the use of an RL output filter comprising a resistor in parallel with an inductor. Such a filter dissipates less power, i.e. is relatively low loss, and does not have the problems associated with capacitors. However, it does not provide dv/dt control to the PWM signal.

Another problem with known power drives is that fast dv/dt transitions can inject a large common mode (CM) current into the chassis of the system such that the system is no longer compliant with e.g. EMI requirements.

Most of the solutions proposed for managing transmission line effects, discussed above, will not have any impact on the CM current.

US 5,990,654 teaches an RL output filter to limit transmission line effects in differential mode and also adds a common mode choke in series with the filter to reduce transmission line effects in common mode operation. US 5,990,654 teaches an RL output filter to limit transmission line effects in differential mode and also adds a common mode choke in series with the filter to reduce transmission line effects in common mode operation.

Switching technology has advanced with the use of fast switching SiC and GaN devices, but these devices are not able to show their full potential because large amounts of energy are being dissipated by the output filter provided to mitigate transmission line effects.

It would be desirable to provide a filter for a power line that effectively and efficiently manages transmission line effects without dissipating excessive power and also to limit dv/dt at the motor terminals.

SUMMARY

According to one aspect of the disclosure, there is provided an output filter for a power train having one or more phase lines, for a high impedance load, comprising, for each phase line of the power train, a main inductor (100), and in parallel with the main inductor, an auxiliary inductor (200) and a resistive element (300) connected in series.

According to another aspect there is provided a power train incorporating such an output filter. The output filter can be used for single or multiple power trains.

BRIEF DESCRIPTION OF THE DRAWINGS

Figure 1 is a schematic diagram of the components of a typical power train for a motor.

Figure 2 is a schematic circuit diagram of one filter according to this disclosure.

Figure 3 is a schematic circuit diagram of three phase power train with a filter according to this disclosure.

Figure 4 is a schematic circuit diagram of two phase power train with a filter according to this disclosure.

Figure 5 is a schematic circuit diagram of single phase power train with a filter according to this disclosure.

DETAILED DESCRIPTION

The described embodiments are by way of example only. The scope of this disclosure is limited only by the claims.

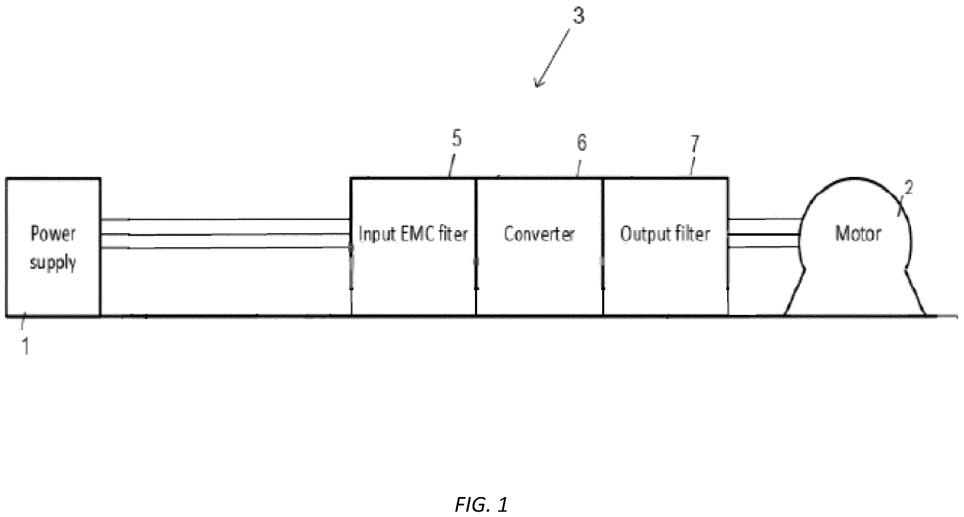

A typical power train for a motor is described with reference to Fig. 1. Power is provided from a power supply 1 to a motor 2 along a power train 3. The power from the power supply 1 passes through a converter which comprises, here, an input EMC filter 5 to reduce high frequency electronic noise that may cause interference with other devices, and a main converter 6. An output filter 7 is then generally provided to mitigate transmissions line effects as described above. The converter and input and output filters are mounted to a system chassis , e.g. a copper plate.

The usage of high frequency PWM based VSIs generates high frequency voltage pulses at the motor terminal can cause overvoltage spikes due to the short rise time of the pulses. In particular, this phenomena is caused when a long cable is used to connect the VSI to the motor. Under such circumstances of high frequency operation and long cables, the cable can be modelled in accordance with transmission line theory particularly due to the short rising time of the pulses. This is discussed, e.g. in E. Persson, "Transient effects in application of PWM inverters to induction motors", in IEEE Transactions on Industry Applications, vol. 28, no. 5, pp. 1095-1101, Sept.-Oct. 1992. The reason for this behaviour can be found in the mismatch between the motor surge and the cable characteristic impedances (being the motor surge impedance typically higher), as part of the voltage pulses send from the VSI will be reflected back causing the voltage to increase and being able to reach twice the inverter output voltage. This is discussed, e.g. in J. C. G. Wheeler, "Effects of converter pulses on the electrical insulation in low and medium voltage motors", in IEEE Electrical Insulation Magazine, vol. 21, no. 2, pp. 22-29, March-April 2005.

In order to solve the aforementioned problem the first approach would be the use of a passive filter that can be either placed at the output of the VSI as discussed in e.g. A. von Jouanne and P. N. Enjeti, "Design considerations for an inverter output filter to mitigate the effects of long motor leads in ASD applications," in IEEE Transactions on Industry Applications, vol. 33, no. 5, pp. 1138-1145, Sept.-Oct. 1997 or in K. K. Yuen and H. S. Chung, "A Low-Loss "RL-Plus-C" Filter for Overvoltage Suppression in Inverter-Fed Drive System With Long Motor Cable," in IEEE Transactions on Power Electronics, vol. 30, no. 4, pp. 2167-2181, April 2015, or at the motor terminal as discussed in A. F. Moreira, P. M. Santos, T. A. Lipo and G. Venkataramanan, "Filter networks for long cable drives and their influence on motor voltage distribution and common-mode currents," in IEEE Transactions on Industrial Electronics, vol. 52, no. 2, pp. 515-522, April 2005 or in J. He, G. Y. Sizov, P. Zhang and N. A. O. Demerdash, "A review of mitigation methods for overvoltage in long-cable-fed PWM AC drives," 2011 IEEE Energy Conversion Congress and Exposition, Phoenix, AZ, 2011, pp. 2160-2166.

The second approach would be based on using an active circuit to match the cable impedance while being able to regenerate some energy as discussed in K. K. Yuen, H. S. Chung and V. S. Cheung, "An Active Low-Loss Motor Terminal Filter for Overvoltage Suppression and Common-Mode Current Reduction," in IEEE Transactions on Power Electronics, vol. 27, no. 7, pp. 3158-3172, July 2012; T. Shimizu, M. Saito, M. Nakamura and T. Miyazaki, "A Motor Surge Voltage Suppression Method With Surge Energy Regeneration," in IEEE Transactions on Power Electronics, vol. 27, no. 7, pp. 3434-3443, July 2012; and K. K. Yuen and H. S. Chung, "Use of Synchronous Modulation to Recover Energy Gained From Matching Long Cable in Inverter-Fed Motor Drives," in IEEE Transactions on Power Electronics, vol. 29, no. 2, pp. 883-893, Feb. 2014.

It has conventionally been considered important, when designing output filters such as those discussed above, to provide a terminal resistance closely matching the characteristic impedance of the transmission line. The inductance, in an RL or RLC filter, has been selected to assure a specific RL time constant.

Particularly for the RL, the voltage surge is minimized by creating a high frequency voltage divider. The working principle is as follow: a high frequency edge for a well-defined period of time (i.e., twice the time delay of transmission line) will interact with the resistor of the filter due to the high impedance of an inductor at high frequency and will perform a voltage divider with the characteristic impedance of the cable connected. If the filter resistor is equal to the characteristic impedance of the cable, both resistances create a voltage divider that will divide the voltage to its half. Therefore, for this period of time the voltage at the output of the filter is reduced by 50% in comparison to its nominal value. It is only when the wave reaches the output of the cable that it is doubled due to impedance mismatch, thus reaching its nominal voltage.

The present inventors have found, by extensive experimentation, that while it is true that there is an advantage in matching the filter resistance to characteristic impedance of the transmission line, there is an alternative RL relationship that can result in lower voltage rise time (dv/dt) at the motor terminals.

The inventors determined that for a matched RL filter, the transfer of the transmission line for a given time delay can be represented as:

$$G_1(s) = \frac{sL + R}{sL\left(\frac{R + Z_0}{Z_0}\right) + R}$$

This results in a slope, when plotted in the frequency domain, that forms a band limited capacitive effect allowing reduction of dv/dt at the motor terminals without using capacitors. If the resistance (R) matches $Z_0$, the characteristic impedance of the transmission line, there will be a minimum dv/dt reduction. Using known RL topology in combination with these findings, suggests that dv/dt reduction can be improved by increasing the inductor L and resistance R to values higher than the characteristic impedance of the cable. Increasing the value of the inductor L, though, will increase its size and weight.

To provide an improved filter that provides a capacitive effect without the use of capacitors, that reduces dv/dt, but does not considerably add to the weight of the filter to do so, on the basis of this knowledge, the inventors have designed an output filter in which a relatively small auxiliary resistor $L_{aux}$ is provided in series with the filter resistor R and in parallel with the main inductor L,

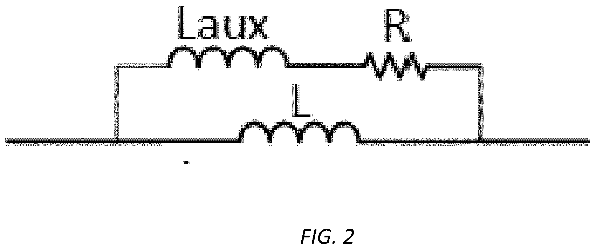

The resulting 'R2L' filter, shown schematically in Fig. 2, provides a transfer function represented as:

$$G_1(s) = \frac{s(L + L_{aux}) + RZ_0}{s^2 LL_{aux} + s(LR + RZ_0 + Z_0 L_{aux}) + RZ_0}$$

In the frequency domain, this produces slopes at two different frequency bands.

Now, the dv/dt can be altered by varying the auxiliary inductor without increasing the main inductor.

The inventors verified this by comparing the dv/dt of the known RL filter with the 'R2L' filter for different values of $L_{aux}$, to provide substantially the same overshoot. The results showed that dv/dt can be reduced by increasing $L_{aux}$. On the other hand, increased $L_{aux}$ resulted in a greater overshoot (higher peak voltage) and so a trade-off between dv/dt and overshoot can be achieved by selecting $L_{aux}$. The value of the resistor was lower than $Z_0$ and optimized to reduce the weight of the system while keeping the overshoot under a certain level, and the value of the main inductor was selected for the time constant, to achieve optimal management of transmission line effects. In addition, the optimization of the 'R2L' can yield filters that allow control of the dv/dt while not increasing the weight of the original RL and not increasing the overshoot.

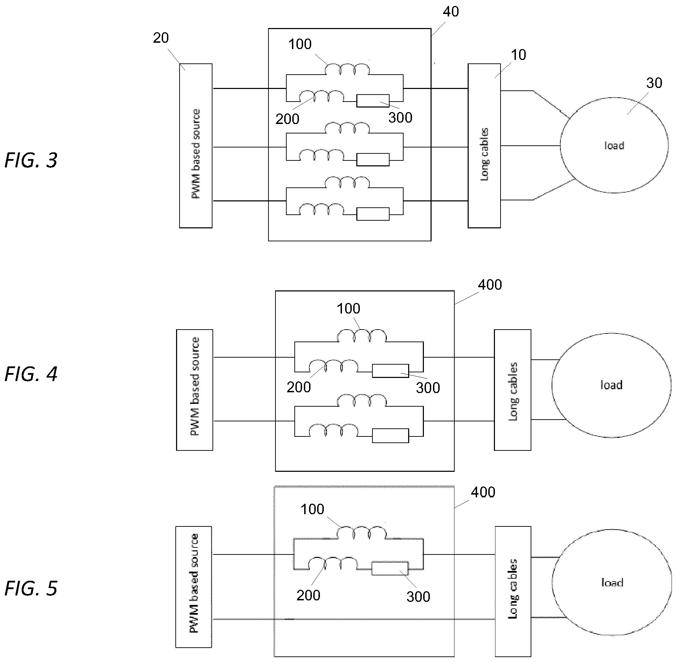

Figs. 3 to 5 show, respectively, schematic circuits incorporating an R2L output filter 400 on a long transmission cable 10 between a power source 20 and a load 30 (motor). Fig. 3 represents a three phase system, Fig. 4 a two phase system and Fig. 5 a single phase system. The filter 400 includes, for each phase, a resistor 200 connected in series with an auxiliary inductor 300, the series connected resistor and auxiliary inductor connected in parallel with a main inductor 100.

The same concept can be used to advantage in any multi- or single-phase systems.

Whilst the auxiliary inductor can be provided as a separate component, it can also be incorporated in the resistor to reduce weight.

The values of the components can be selected to optimise voltage overshoot, rate of change of voltage (dv/dt) and weight.

The main inductor will initially present a large impedance to the higher frequencies of a pulse travelling to the motor terminal along the transmission line. This will force the high frequencies of the pulse to route through the parallel branch of the relatively small auxiliary inductor and the resistor. The resistor will reduce the peak value of the pulse and the auxiliary inductor will contribute to reducing dv/dt. After some time (determined by the values of the resistor and the main inductor) the inductor impedance will decrease and allow the pulse to travel through the path of the main inductor. A similar effect takes place in the reverse direction for the reflected pulses causing the pulses to dissipate at the resistor.

The filter arrangement of this disclosure provides effective management of transmission line effects while reducing dv/dt, without the use of capacitors and without considerably adding to the weight of the filter.

Such filters will have particular advantages in aircraft power trains but will find application in a wide range of power systems.

The embodiments described above are given by way of example only. The scope of the invention is as defined by the claims.

**Claims**

1. An output filter for a power train having one or more phase lines, for a high impedance load, comprising:

   for each phase line of the power train, a main inductor (100), and
   in parallel with the main inductor, an auxiliary inductor (200) and a resistive element (300) connected in series.

2. The output filter of claim 1, wherein the power train has three phase lines, and the filter comprises three main inductors (100), one associated with each phase line, and the series connected auxiliary inductor (200) and resistive element (300), each connected in parallel with a respective main inductor.

3. The output filter of claim 1, wherein the power train has two phase lines, and the filter comprises two main inductors (100), one associated with each phase line, and the series connected auxiliary inductor and resistive element, each connected in parallel with a respective main inductor.

4. The output filter of claim 1, wherein the power train has a single phase line, and the filter comprises a single main inductor across which is connected an auxiliary inductance and a resistive element in series.

5. A power train for a high impedance load comprising:

   an input EMC filter (5) for connection to a power supply (1);
   a converter (6) connected to an output of the input EMC filter; and
   an output filter (7) as claimed in any preceding claim, connected to the output of the converter.

6. A power train for a high impedance load, as claimed in claim 1, further comprising the power supply (1).

7. A power train for a high impedance load as claimed in claim 5 or 6, further comprising a high impedance load (2) connected to an output of the output filter.

8. The power train of claim 7, wherein the high impedance load is a motor (2).

*FIG. 1*

*FIG. 2*

*FIG. 3*

*FIG. 4*

*FIG. 5*

Europäisches
Patentamt

European
Patent Office

Office européen
des brevets

## EUROPEAN SEARCH REPORT

Application Number

EP 19 19 7400

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2017/372835 A1 (CHAI HARRY [US] ET AL) 28 December 2017 (2017-12-28) * paragraphs [0001], [0002], [0022], [0023], [0028]; figure 3 * ----- | 1-8 | INV. H02M1/12 H02H9/00 H02M1/44 |
| A | US 2018/091111 A1 (WENNERSTROM HANS [US] ET AL) 29 March 2018 (2018-03-29) * paragraphs [0079], [0080], [0241], [0242]; figures 1E, 1F, 28A * ----- | 2-8 | |

TECHNICAL FIELDS
SEARCHED (IPC)

H02M
H02H

The present search report has been drawn up for all claims

| Place of search | Date of completion of the search | Examiner |
|---|---|---|
| The Hague | 21 February 2020 | Zeljkovic, Sandra |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

  .........................................................................

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 19 19 7400

This annex lists the patent family members relating to the patent documents cited in the above-mentioned European search report.
The members are as contained in the European Patent Office EDP file on
The European Patent Office is in no way liable for these particulars which are merely given for the purpose of information.

21-02-2020

| Patent document cited in search report | Publication date | Patent family member(s) | Publication date |
|---|---|---|---|
| US 2017372835 A1 | 28-12-2017 | EP 3297006 A1<br>US 2017372835 A1 | 21-03-2018<br>28-12-2017 |
| US 2018091111 A1 | 29-03-2018 | NONE | |

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 5990654 A

### Non-patent literature cited in the description

- **E. PERSSON.** Transient effects in application of PWM inverters to induction motors. *IEEE Transactions on Industry Applications,* September 1992, vol. 28 (5), 1095-1101
- **J. C. G. WHEELER.** Effects of converter pulses on the electrical insulation in low and medium voltage motors. *IEEE Electrical Insulation Magazine,* March 2005, vol. 21 (2), 22-29
- **A. VON JOUANNE ; P. N. ENJETI.** Design considerations for an inverter output filter to mitigate the effects of long motor leads in ASD applications. *IEEE Transactions on Industry Applications,* September 1997, vol. 33 (5), 1138-1145
- **K. K. YUEN ; H. S. CHUNG.** A Low-Loss "RL-Plus-C" Filter for Overvoltage Suppression in Inverter-Fed Drive System With Long Motor Cable. *IEEE Transactions on Power Electronics,* April 2015, vol. 30 (4), 2167-2181
- **A. F. MOREIRA ; P. M. SANTOS ; T. A. LIPO ; G. VENKATARAMANAN.** Filter networks for long cable drives and their influence on motor voltage distribution and common-mode currents. *IEEE Transactions on Industrial Electronics,* April 2005, vol. 52 (2), 515-522
- **J. HE ; G. Y. SIZOV ; P. ZHANG ; N. A. O. DEMERDASH.** A review of mitigation methods for overvoltage in long-cable-fed PWM AC drives. *2011 IEEE Energy Conversion Congress and Exposition,* 2011, 2160-2166
- **K. K. YUEN ; H. S. CHUNG ; V. S. CHEUNG.** An Active Low-Loss Motor Terminal Filter for Overvoltage Suppression and Common-Mode Current Reduction. *IEEE Transactions on Power Electronics,* July 2012, vol. 27 (7), 3158-3172
- **T. SHIMIZU ; M. SAITO ; M. NAKAMURA ; T. MIYAZAKI.** A Motor Surge Voltage Suppression Method With Surge Energy Regeneration. *IEEE Transactions on Power Electronics,* July 2012, vol. 27 (7), 3434-3443
- **K. K. YUEN ; H. S. CHUNG.** Use of Synchronous Modulation to Recover Energy Gained From Matching Long Cable in Inverter-Fed Motor Drives. *IEEE Transactions on Power Electronics,* February 2014, vol. 29 (2), 883-893